# EUROPEAN PATENT SPECIFICATION

(11) **EP 2 452 489 B1**
(45) Date of publication and mention of the grant of the patent: **17.06.2020**
(21) Application number: 10796574.1
(22) Date of filing: 06.07.2010
(51) Int. Cl.: H04N 7/18, H04N 7/173, H04N 7/24, H04N 21/2187

(54) **SYSTEMS AND METHODS FOR MANAGING VIDEO DATA**
SYSTEME UND VERFAHREN ZUR VERWALTUNG VON VIDEODATEN
SYSTÈMES ET PROCÉDÉS DE GESTION DE DONNÉES VIDÉO

(30) Priority: 08.07.2009 AU 2009903214
(43) Date of publication of application: 16.05.2012
(73) Proprietor: Honeywell International Inc., Morris Plains, NJ 07950 (US)
(72) Inventor: PALMER, Sally-Anne, Artarmon New South Wales 2064 (AU)
(74) Representative: Houghton, Mark Phillip
(86) International application number: PCT/AU2010/000844
(87) International publication number: WO 2011/003131

(56) References cited:
- WO-A1-00/76220
- WO-A1-2006/126974
- WO-A1-2007/043798
- JP-A- 2004 080 256
- US-A1- 2006 136 972

## Description

### FIELD OF THE INVENTION

The present invention relates to systems and methods for managing video data. Embodiments of the invention have been particularly developed for facilitating efficient utilization of live video data in one or more Digital Video Management (DVM) systems. While some embodiments will be described herein with particular reference to that application, it will be appreciated that the invention is not limited to such a field of use, and is applicable in broader contexts.

### BACKGROUND

Any discussion of the background art throughout the specification should in no way be considered as an admission that such art is widely known or forms part of common general knowledge in the field.

Digital Video Management (DVM) systems, particularly those based on the Honeywell DVM model, are widely used. In overview, a plurality of cameras are assigned to a plurality camera servers, with each camera server being configured to make available (for live viewing or recording purposes) video data from an assigned one or more cameras. The camera servers are all centrally managed by a DVM database server. In general terms, a client wishing to view live video data from a given one of the cameras provides a request to the DVM database server, and is informed which camera server makes available video data for that camera. The client then opens a connection with that camera server, and streams the live video data for local viewing.

DVM systems are resource intensive, particularly in terms of bandwidth, CPU and storage. Unfortunately, when configuring cameras for use in a DVM system, optimization of camera settings for the purpose of conserving one resource typically comes at the expense of other resources. For example, use of a low compression stream conserves CPU, allowing camera servers and clients to support a relatively large number of streams. However, low compression streams are particularly expensive in terms of bandwidth and storage requirements US 2006/136972 A1 discloses a digital video management system according to the preambles of claims 1 and 15.

There is a need in the art for improved systems and methods for managing video data.

### SUMMARY OF THE INVENTION

The present invention provides a system as defined in claim 1. The system may include the features of any one or more of dependent claims 2 to 14.

The present invention also provides a method as defined in claim 15.

It is an object of the present invention to overcome or ameliorate at least one of the disadvantages of the prior art, or to provide a useful alternative.

Reference throughout this specification to "one embodiment", "some embodiments" or "an embodiment" means that a particular feature, structure or characteristic described in connection with the embodiment is included in at least one embodiment of the present invention. Thus, appearances of the phrases "in one embodiment", "in some embodiments" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

As used herein, unless otherwise specified the use of the ordinal adjectives "first", "second", "third", etc., to describe a common object, merely indicate that different instances of like objects are being referred to, and are not intended to imply that the objects so described must be in a given sequence, either temporally, spatially, in ranking, or in any other manner.

In the claims below and the description herein, any one of the terms comprising, comprised of or which comprises is an open term that means including at least the elements/features that follow, but not excluding others. Thus, the term comprising, when used in the claims, should not be interpreted as being limitative to the means or elements or steps listed thereafter. For example, the scope of the expression a device comprising A and B should not be limited to devices consisting only of elements A and B. Any one of the terms including or which includes or that includes as used herein is also an open term that also means including at least the elements/features that follow the term, but not excluding others. Thus, including is synonymous with and means comprising.

### BRIEF DESCRIPTION OF THE DRAWINGS

Embodiments of the invention will now be described, by way of example only, with reference to the accompanying drawings in which:
FIG. 1 schematically illustrates a DVM system according to one embodiment.
FIG. 2A illustrates a video streaming unit according to one embodiment.
FIG. 2B illustrates a video streaming unit according to one embodiment.
FIG. 3A illustrates a video streaming arrangement according to one embodiment.
FIG. 3B illustrates a video streaming arrangement according to one embodiment.
FIG. 3C illustrates a video streaming arrangement according to one embodiment.
FIG. 3D illustrates a video streaming arrangement according to one embodiment.
FIG. 3E illustrates a video streaming arrangement according to one embodiment.
FIG. 3F illustrates a video streaming arrangement according to one embodiment.
FIG. 3G illustrates a video streaming arrangement according to one embodiment.

### DETAILED DESCRIPTION

Described herein are systems and methods for managing video data. Embodiments are described by reference to a Digital Video Management (DVM) system which makes use of a plurality of camera servers. Each camera server is configured to utilise video data from an assigned one or more streaming units. For example, a camera server is optionally configured to make available live video data from a given streaming unit, and/or record to disk video data from that streaming unit. The system includes a plurality of such video streaming units, each streaming unit being configured to stream, onto a network, video data for a respective camera. At least one video streaming unit is a multi-stream unit configured to provide video data for its respective camera concurrently via at least a first and second stream, these streams having respective video parameters. Embodiments of the present invention are directed towards systems and methods for making use of such a multi-stream unit for providing advantageous DVM functionalities. For example, in some embodiments the first and second streams are assigned to respective purposes, whilst in other embodiments the first and second streams are assigned to respective camera servers.

### SYSTEM LEVEL OVERVIEW

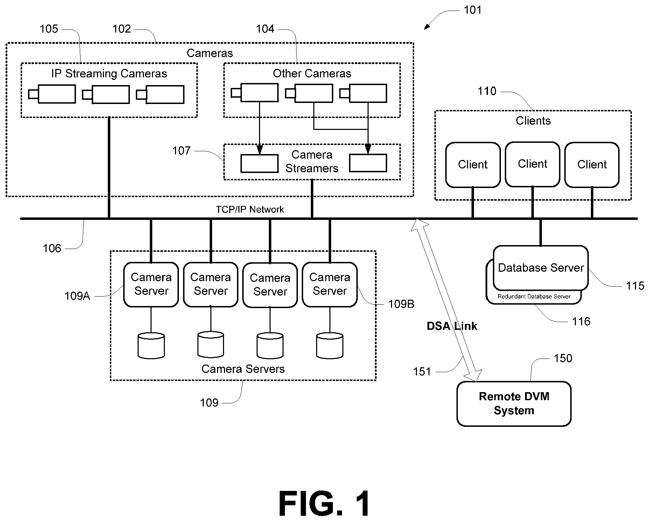

FIG. 1 illustrates a general Digital Video Management (DVM) system 101. System 101 is described to provide general context to various embodiments discussed below. Although embodiments are described by reference to DVM systems based on system 101, the present invention is not limited as such. That is, system 101 is provided as a general example to highlight various features of an exemplary DVM system. In practice, many systems omit one or more of these features, and/or include additional features.

System 101 includes a plurality of video streaming units 102. Units 102 include conventional cameras 104 (including analogue video cameras) coupled to discrete video streaming units, and IP streaming cameras 105. Video streaming units 102 stream video data, presently in the form of surveillance footage, on a TCP/IP network 106. This is readily achieved using IP streaming cameras 105, which are inherently adapted for such a task. However, in the case of other cameras 104 (such as conventional analogue cameras), a discrete video streaming unit 107 is required to convert a captured video signal into a format suitable for IP streaming.

For the purposes of the present disclosure, the term "video streaming unit" should be read to include IP streaming cameras 105 and video streaming units 107. That is, the term "video streaming unit" describes any hardware component configured to stream video data onto a network, independent of the source of the originating analogue video data.

For the present purposes, the terms "video streaming unit" and "camera" are generally used interchangeably, on the assumption that each video streaming unit corresponds to a unique set of optical components used to capture video. That is, there is a one-to-one relationship between streaming units 107 and cameras 104. However, in other embodiments there is a one-to-many relationship between streaming units 107 and cameras 104 (i.e. a streaming unit is configured for connection to multiple cameras).

One or more camera servers 109 are also connected to network 106 (these may be either physical servers or virtual servers). Each camera server is enabled to have assigned to it one or more of video streaming units 102. In some embodiments the assignment is on a stream-by-stream basis rather than a camera-by-camera basis. This assignment is carried out using a software-based configuration tool, and it follows that camera assignment is virtual rather than physical. That is, the relationships are set by software configuration rather than hardware manipulation. In practice, each camera has a unique identifier. Data indicative of this identifier is included with surveillance footage being streamed by that camera such that components on the network are able to ascertain from which camera a given stream originates.

In the present embodiment, camera servers are responsible for making available both live and stored video data. In relation to the former, each camera server provides a live stream interface, which consists of socket connections between the camera manager and clients. Clients request live video through the camera server's COM interfaces and the camera server then pipes video and audio straight from the relevant streaming unit to the client through TCP sockets. In relation to the latter, each camera server has access to a data store for recording video data. Although FIG. 1 suggests a one-to-one relationship between camera servers and data stores, this is by no means necessary. Each camera server also provides a playback stream interface, which consists of socket connections between the camera manager and clients. Clients create and control the playback of video stored that the camera server's data store through the camera manager's COM interfaces and the stream is sent to clients via TCP sockets.

Although, in the context of the present disclosure, there is discussion of one or more cameras or streaming units being assigned to a common camera server, this is a conceptual notion, and is essentially no different from a camera server being assigned to one or more cameras or streaming units.

Clients 110 execute on a plurality of client terminals, which in some embodiments include all computational platform on network 106 that are provided with appropriate permissions. Clients 110 provide a user interface (UI) that allows surveillance footage to be viewed in real time by an end-user. For example, one UI component is a render window, in which streamed video data is rendered for display to a user. In some cases this user interface is provided through an existing application (such as Microsoft Internet Explorer), whilst in other cases it is a standalone application. The user interface optionally provides the end-user with access to other system and camera functionalities, including mechanical, digital and optical camera controls, control over video storage, and other configuration and administrative functionalities (such as the assignment and reassignment of cameras to camera servers). Typically clients 110 are relatively "thin", and commands provided via the relevant user interfaces are implemented at a remote server, typically a camera server. In some embodiments different clients have different levels of access rights. For example, in some embodiments there is a desire to limit the number of users with access to change configuration settings or mechanically control cameras.

System 101 also includes a DVM database server 115. Database server 115 is responsible for maintaining various information relating to configurations and operational characteristics of system 101, and for managing events within the system. In terms of events, the general notion is that an action in the system (such as the modification of data in the database, or the reservation of a camera, as discusses below) causes an event to be "fired" (i.e. published), this having follow-on effects depending on the nature of the event.

In the present example, the system makes use of a preferred and redundant database server (115 and 116 respectively), the redundant server essentially operating as a backup for the preferred server. The relationship between these database servers is generally beyond the concern of the present disclosure.

Some embodiments of the present invention are directed to distributed DVM systems, also referred to as "distributed system architecture" (DSA). In general terms, a distributed DVM system includes a plurality of (i.e. two or more) discrete DVM systems, such as system 101. These systems are discrete in the sense that they are in essence standalone systems, able to function autonomously without the other by way of their own DVM servers. They may be distributed geographically (for example in different buildings, cities or countries), or notionally (in a common geographic location, but split due to individual system constraints, for example camera server numbers, or simply to take advantage of benefits of a distributed architecture). In the context of FIG. 1, a remote system 150, communicates with the local system via a DSA link 151. For the present purposes, it is assumed that remote system 150 is in a general sense similar to the local system. Various components (hardware and software) are configured to allow communications between the systems, for example via a network connection (including, but not limited to, an Intranet or Internet connection), or other communications interface. For the sake of the present embodiments, it is assumed that the inter-system communications occur by way of TCP/IP connections, and in this manner any communications channel supporting TCP/IP may be used

### MULTI-STREAM UNITS

As noted, for the purposes of the present disclosure, the term "video streaming unit" should be read to include IP streaming cameras 105 and video streaming units 107. That is, the term "video streaming unit" describes any hardware component configured to stream video data onto a network, independent of the source of the originating analogue video data.

In the present embodiments, a DVM system includes a least one video streaming unit in the form of a multi-stream unit. A multi-stream unit is configured to provide video data for its respective camera concurrently via at least first and second stream. That is, in some cases there are two streams, whereas in other cases there are more than two streams.

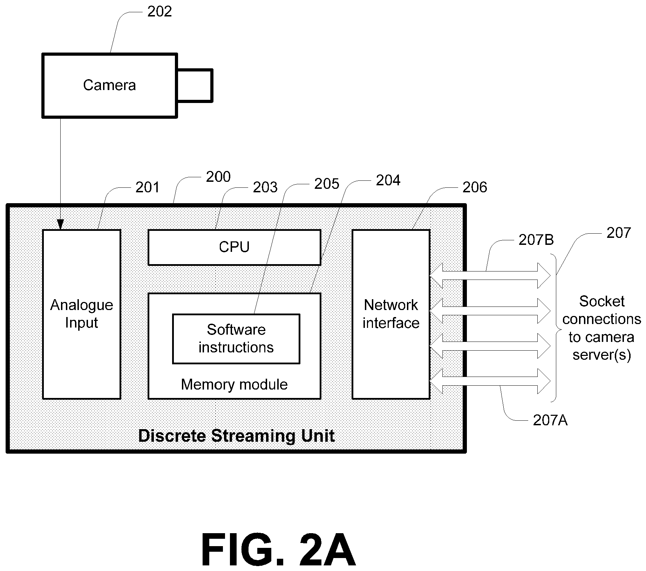

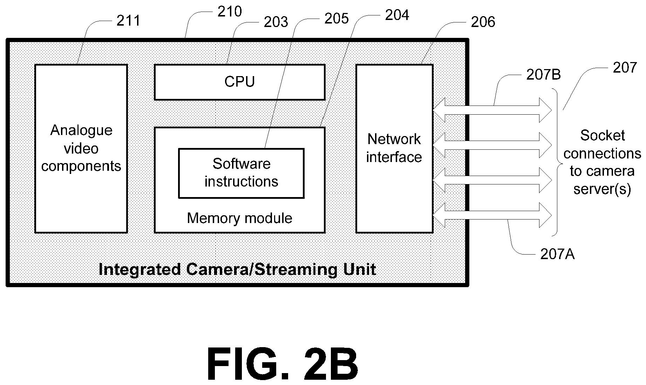

Examples of multi-stream units are schematically illustrated in FIG. 2A and FIG. 2B, which respectively illustrate a discrete multi-stream unit 200 and an integrated camera/multi-stream unit 210. Corresponding components are assigned corresponding reference numerals.

Referring initially to FIG. 2A, multi-stream unit 200 includes an analogue input 201 for allowing connection between unit 200 and a camera 202, such that unit 200 receives video data from camera 202. For example, in one embodiment input 201 includes one or more RCA jacks or the like. In some embodiments such a unit includes input for connection to multiple cameras. In the present embodiment it is assumed that the term "video data" is sufficiently broad to encompass the provision of video frames and associated audio data. However, in some cases video data has no associated audio component.

Unit 200 includes a CPU 203 coupled to a memory module 204. Memory module 204 maintains software instructions 205, which are executable via CPU 204 thereby to allow unit 200 to provide various functionalities. For example, this allows conversion of analogue video data from camera 202 to packetized video data for streaming onto a network. These software instructions also optionally allow for the configuration of unit 200, for example in terms of configuring stream parameters, as discussed further below. The example of a CPU and memory module is relatively generic, and provided as a simple example only. In other embodiments unit 200 includes various other hardware/software components, including onboard hardware based video conversion components and the like.

A network interface 206, for example in the form of one or more Ethernet ports and/or an 802.11 wireless radio, allows unit 200 to communicate over a network. In the present embodiment, network interface 206 provides a plurality of socket connections 207. As noted, unit 200 provides video data for its respective camera concurrently via a first and second stream. For the sake of the present example, the first stream is provided via socket connection 207A, and the second stream provided via socket connection 207B. That is, a camera server wishing to utilise the first stream connects to socket connection 207A, whereas a camera server wishing to utilise the second stream connects to socket connection 207B. In the present embodiment there are four socket connections, each being associated with a respective stream. That is, unit 200 is configured to concurrently stream video data from camera 202 via four separate stream, each optionally having unique video parameters (for example frame rate and the like).

In some embodiments, unit 200 is embodied by an Axis Q7401 or an Axis Q7406 device. Other devices similarly having appropriate hardware for allowing a single analogue input to be converted into multiple concurrent IP video streams are used in further embodiments.

Referring to FIG. 2B, unit 210 is generally similar to unit 200, with the important point of distinction that input 201 and camera 202 are replaced by analogue video components 211. In this manner, unit 210 is able to both capture video, and stream that video onto a network via multiple concurrent streams having respective video properties.

### INCORPORATION OF MULTI-STREAM UNITS IN A DVM SYSTEM

As in the example of FIG. 1, a plurality of camera servers 109 are each configured to utilise video data from an assigned one or more streaming units 102. Each streaming unit is configured to stream, onto a network, video data for a respective camera. At least one video streaming unit is a multi-stream unit configured to provide video data for its respective camera concurrently via at least a first and second stream, wherein the first and second stream have respective video parameters. Embodiments of the present invention are directed towards DVM systems including at least one multi-stream unit, such as unit 200 or unit 210. Generally speaking, such a DVM system includes a plurality of multi-stream units, and in some cases all video data is made available over the network via multi-stream units. For the present purposes, it is assumed that all video streaming units are multi-stream units.

In overview, multi-stream functionality is used to allow improved efficiencies in DVM system 101. In particular, the individual streams are optimized for their intended purposes. To this end, the DVM system includes a software component for allowing a user to configure the multi-stream units (individually or collectively) thereby to define streams having selected video parameters. The present disclosure describes various approaches for utilizing such optimized streams, these being generally split into two main categories:
- Assignment of video streams for specific purposes. By this approach, video streams are used for respective purposes. For example, one of the video streams is used for the display of live video data to a client; whereas another is used for the recording of video data to a storage location.
- Assignment of camera servers at a stream level. In pre-existing DVM systems, the conventional approach is to assign a specific camera to a specific camera server. However, the present approach is to assign a specific stream to a specific camera server. In this manner, a given camera is in some cases assigned to multiple camera servers. A client (or process) connects to the appropriate camera server depending on the desired stream.

It should be appreciated that the above approaches are in some cases used in combination. For example, assigning two streams originating from the video feed of a certain camera to two camera servers is in some cases directly predicated upon the purpose of those streams.

In the present disclosure, the concept of a stream and the socket connection that provides that stream are used generally interchangeably. That is, a stream can be described in terms of a stream descriptor (such as a name) the socket connection from which that stream is available.

Configuring a DVM system for making use of multi-stream functionalities requires some modification to the system. To this end, one embodiment provides a configuration tool for allowing a user to define video parameters for differing streams provided by a given video streaming unit. For example, such a tool provides a user interface that is rendered at a client terminal for allowing a user to input data indicative of a set of video parameters for a given streaming unit (or for a plurality of streaming units). Once defined, the user submits the set of parameters, which are processed to provide instructions to the relevant streaming unit (or plurality of streaming units), thereby to configure the relevant streaming unit (or plurality of streaming units) to provide a stream in accordance with the defined set of video parameters. Data indicative of the stream, and the socket connection through which it is available (or streams and connections) is stored at database server 115. This allows clients and/or processes to locate and connect to streams as required.

The video parameters considered for the present purposes include, but are not limited to, the following:
- Level of compression. This may be defined in terms of compression format, for example in terms of MPEG or H.264.
- Frame rate.
- Color.
- Resolution.
- Whether or not audio should be provided.
- Bandwidth. It will be appreciated that this may be a combination of a number of factors.
- Pre-streaming analytics. For example, in some embodiments a video processing operation is performed at the streaming unit thereby to assist in downstream analytics. This may result in the provision of video data that is not able to be rendered to provide a visual representation; it may simply be data (such as an overall measure of a characteristic of each frame) that it used for analytics purposes.

In some embodiments the configuration tool provides a plurality of generic video parameter sets, or sliding scales for allowing a user to conveniently define a parameter set having desired characteristics.

A further embodiment takes the form of a configuration tool for allowing a user to define a protocol for the utilisation the discrete streams provided by a multi-stream unit. For example, this allows for the creation of stream-related rules in a DVM object model. These are optionally event driven. So as to provide a simple example, a given rule may cause a camera server that utilises the first stream for recording video data by default to, responsive to a signal indicative of an event in the DVM system, utilise a second stream for recording video for a predetermined period of time. In practice, this might be used to record higher quality video data when an analytics module indicates activity in the view of a given camera.

Several exemplary implementations are discussed further below.

### EXEMPLARY IMPLEMENTATION 1

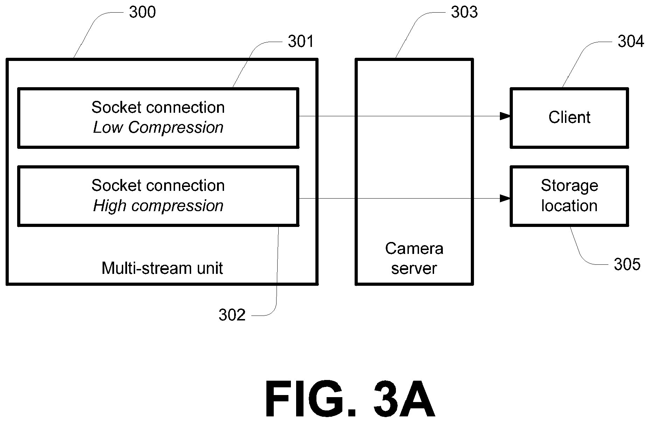

FIG. 3A illustrates a first exemplary implementation. In overview, this implementation is directed towards the use of different streams for live view and recording purposes.

In this exemplary implementation, a multi-stream unit 300 is configured to provide video data originating from a given camera concurrently via a first stream (which is available over a network via socket connection 301) and a second stream (which is available over a network via socket connection 302). The first stream is defined by a set of video parameters thereby to provide a low compression stream, specifically being a low compression MPEG stream. The second stream is defined by a set of video parameters thereby to provide a high compression stream, specifically being a high compression H.264 stream.

In the present example, unit 300 is assigned to a camera server 303. Camera server 303 is configured to access the two streams based on purpose. That is, the camera server receives an request to access video data from unit 300, and based on the purpose of that request (which may be identified contextually) selectively utilizes the first or second stream.

Camera server 303 is configured to utilise the first stream (i.e. connect to socket connection 301) for the purposes of making live video data available. For example, a client 304 provides a request to view live video data from unit 300, and camera server 303 is configured to connect to socket connection 301 and pipe the live video data directly to the client, thereby to allow the live data to be rendered at the client substantially in real time. It will be appreciated that the low compression stream is well suited to this purpose, particularly due to relatively low levels of CPU resources being required for rendering purposes.

Camera server 303 is configured to utilise the second stream (i.e. connect to socket connection 302) for the purposes of recording video data to a storage location. For example, camera server 303 recognizes an instruction to record video data (e.g. based on a user instruction, predefined schedule, or event in the DVM system such as analytics event), and is configured to connect to socket connection 302 and for the purposes of obtaining and recording the video data. It will be appreciated that the high compression stream is well suited to this purpose, particularly due to relatively low levels of storage resources consumed in the storage process.

In another example, rather than assigning unit 300 to camera server 303, an alternative approach is to assign the first and second streams to camera server 303. This is advantageous in the sense that it removes the need for the camera server to process a request thereby to identify its purpose. However, it is disadvantageous in the sense that additional complexities are introduced elsewhere in a DVM system such that socket connections are individually assignable and individual streams locatable in respect of various requests. For example, a client wishing to view live video data must be able to identify that the first stream (i.e. socket connection 301) is desired.

### EXEMPLARY IMPLEMENTATION 2

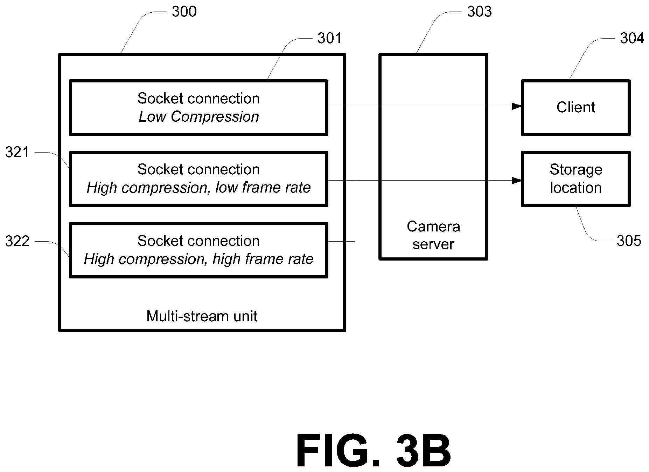

FIG. 3B illustrates a second exemplary implementation. In overview, this implementation is directed towards the use of different streams for live view and recording purposes, and different streams for background recording as opposed to event-based recording.

The example of FIG. 3B is quite similar to that of FIG. 3A, although the second stream is replaced by a high compression low frame rate stream (which is available over a network via socket connection 321, and referred to as a "background recording stream") and a high compression high frame rate stream stream (which is available over a network via socket connection 322, and referred to as an "event-based recording stream").

In one embodiment, camera server 303 is configured to utilise the background recording stream for recording purposes by default via socket connection 321. Then, in response to predefined conditions being met, the camera server instead connects to socket connection 322 and utilises the event-based recording stream for recording purposes. The conditions might include an event originating from an analytics server, and result in better quality recording during known busy times). This is particularly useful in terms of reducing storage requirements without sacrificing quality of significant recordings.

### EXEMPLARY IMPLEMENTATION 3

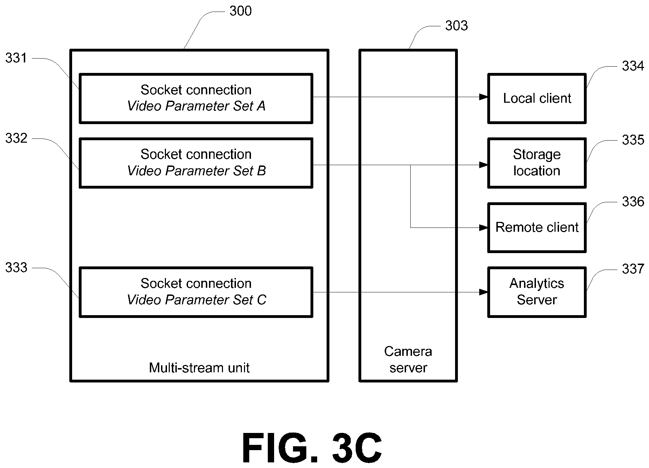

FIG. 3C illustrates a further exemplary implementation. In this example, unit 300 is configured to provide video streams based the following video parameter sets:
- Stream A (socket connection 331). This stream has parameters optimized for viewing of live video data by a local client. For example, this may be a low compression stream.
- Stream B (socket connection 332). This stream is a relatively higher compression stream, with a reduced frame rate of 10 frames per second.
- Stream C (socket connection 333). This stream is optimized based on inputs required by an analytics component in the DVM system.

In this example, unit 300 is assigned to camera server 303, and that camera server configured to operate as follows:
- Utilise stream A (socket connection 331) for requests to deliver live video data to a local client 334.
- Utilise stream B (socket connection 332) for background recording at a storage location 335, and in response to requests to deliver live video data to a remote client 336 (i.e. a client of a remote system such as remote system 150 in FIG. 1). The latter is significant in the sense that a lower frame rate assists in containing bandwidth across a system-system link.
- Utilise stream C (socket connection 333) for delivering video data to an analytics component 337 (optionally being a software component or an analytics server).

The manner by which stream C is optimized for analytics purposes varies between embodiments. In some examples this is simply a case of selecting video parameters to correspond with inputs preferred by the analytics component. In some examples portions of video data are pre-filtered such that extraneous information (such as color) is not provided to an analytics component, thereby to contain bandwidth resources. In some examples this stream is not a video stream per se, but provides other information concerning video data, such as an assessment of the overall average color of some or all of each frame. In some examples unit 300 is configured for performing some onboard analytics.

### EXEMPLARY IMPLEMENTATION 4

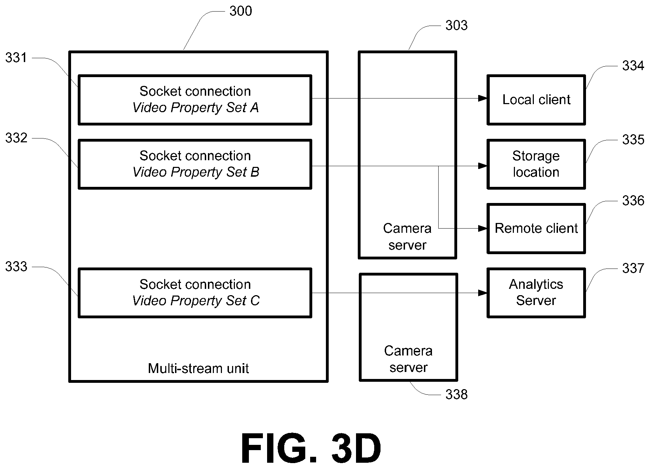

FIG. 3D illustrates a further exemplary implementation. This is similar to implementation 3 above, however, an analytics server 337 uses a camera server 338 connects to socket 333 thereby to obtain the analytics specific stream.

In one such example, a camera server is assigned to a plurality of multi stream units (or analytics socket connections of those units) for the purposes of making available analytics specific streams such that analytics are centrally performed without reliance on a group of camera servers. Furthermore, this assists in situations where an analytics program utilizes streams from multiple cameras as input.

### EXEMPLARY IMPLEMENTATION 5

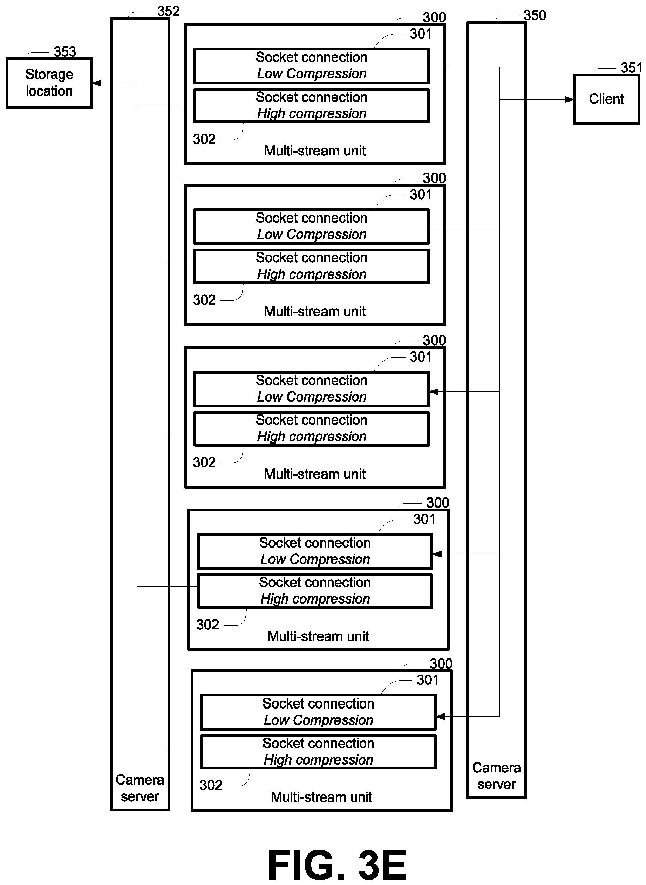

FIG. 3E illustrates an implementation well-suited to show how socket connections are in some cases assigned to camera servers.

In the context of FIG. 3E, there are five units 300, these being configured in a similar manner to those of FIG. 3A. That is, they are each configured with a low compression stream socket connection 301 and a high compression stream socket connection 302. In this embodiment, camera server assignments occur at a socket level, rather than at a unit level. Data indicative of this assignment is maintained in the central DVM database, and components configured to request video data from particular socket connections rather than streaming units. That is, a client wishing to view live video data from a specific unit requests live video data from the low compression socket connection of that unit.

In this example, all of the low compression sockets are assigned to a common camera server 350. In this regard, any client 351 wishing to view live video data connects to that camera server, which pipes live video data through the relevant socket connection. Furthermore, all of the high compression sockets are assigned to a common camera server 352. In this regard, camera server 352 is responsible for all recording of video data to a storage location 353 (although there may be multiple storage locations).

Although the present example adopts a relatively simplistic set of circumstances, such an approach is particularly well suited for optimization in a large DVM system. For example, camera server hardware is able to be optimized for recording or live view purposes. Another exemplary approach is to conduct assignments such that a given camera server handles live view for a relatively large number of units or handles recording for a relatively small number of units.

### EXEMPLARY IMPLEMENTATION 6

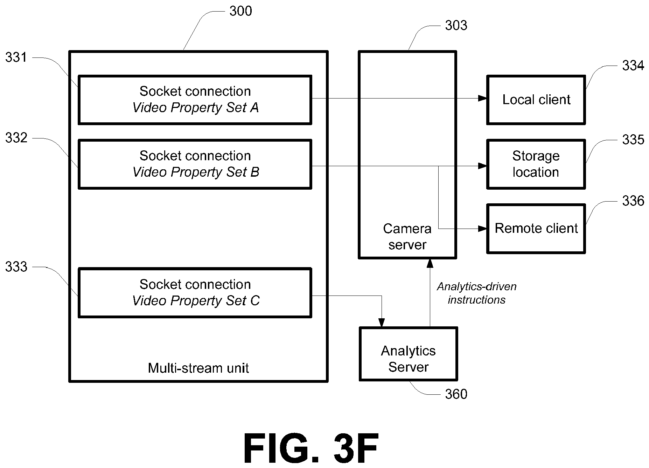

FIG. 3F illustrates an implementation similar to that of FIG. 3D. However, in this implementation an analytics server 360 utilizes the stream having Property Set C, which is available via socket connection 333.

Analytics server 360 generically represents substantially any component configured for perform analytics on streaming video data. For example, it may be a standalone analytics component, or a PC running analytics software.

The present implementation allows analytics server 360 to provide analytics-driven instructions to camera server 303, thereby to influence the utilization of streams obtained from socket connections 331 and 332. For example, these instructions may influence recordings, or the display of live video data. In relation to the latter, in one embodiment the analytics-driven instructions cause camera severer 303 to apply an overlay to live video data provided to client 334, such that a moving object in that video data (recognized by analytics server 360) is better identified (for example by shading).

### EXEMPLARY IMPLEMENTATION 7

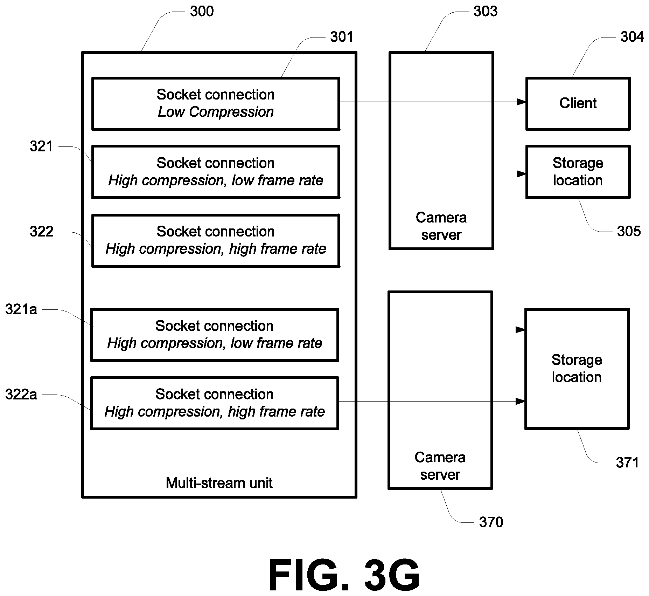

FIG. 3G illustrates an implementation in which multi-stream functionality is used for fault tolerance purposes.

This example is similar to that of FIG. 3B, but socket connections 321 and 322 are replicated by connections 321a and 322a. These connections are configured provide streams having the same video properties as their counterparts. That is, there are two streams configured to provide high compression and high frame rate, and two streams configured to provide high compression and low frame rate. A camera server 370 utilizes the streams available via socket connections 321a and 322a, much in the same manner as camera server 303 utilizes the streams available via socket connections 321 and 322, with the exception that recordings are stored at a storage location 371.

The present approach is significant in the sense that it provides for uninterrupted recordings even in spite of a failure in camera server 303, or in respect of the streams provided via connections 321 and 322.

### USE OF PREDEFINED/USER DEFINED PROFILES

In some embodiments system 101 is configured to provide a camera stream management module, which provides a software-based functionality to clients for the purpose of configuring streams at a multi-stream unit. This camera stream management module operates in conjunction with a repository of "profiles", each profile being indicative of a set of stream configuration parameters (for example in terms of frame rates and so on). The profiles are preferably associated with descriptive names and/or a description of their respective intended purposes. A user interacts with the camera stream management module thereby to select a profile, and apply that profile across some or all of system 101. For example, the profile may be applied in respect of a whole system, selection of cameras, selection of camera servers, scheduled for potation at predetermined times, or similar.

In some cases the camera stream management module additionally allows a user to create new profiles, and add them to the repository. In this manner, a user defines stream configuration parameters based on a specific set of requirements, and makes those available for application in system 101 as required via the camera stream management module.

### CONCLUSIONS AND INTERPRETATION

It will be appreciated that the disclosure above provides various significant systems and methods for managing video data. For example, the present embodiments allows for optimization of DVM systems in various manners.

Unless specifically stated otherwise, as apparent from the following discussions, it is appreciated that throughout the specification discussions utilizing terms such as "processing," "computing," "calculating," "determining", analyzing" or the like, refer to the action and/or processes of a computer or computing system, or similar electronic computing device, that manipulate and/or transform data represented as physical, such as electronic, quantities into other data similarly represented as physical quantities.

In a similar manner, the term "processor" may refer to any device or portion of a device that processes electronic data, e.g., from registers and/or memory to transform that electronic data into other electronic data that, e.g., may be stored in registers and/or memory. A "computer" or a "computing machine" or a "computing platform" may include one or more processors.

The methodologies described herein are, in one embodiment, performable by one or more processors that accept computer-readable (also called machine-readable) code containing a set of instructions that when executed by one or more of the processors carry out at least one of the methods described herein. Any processor capable of executing a set of instructions (sequential or otherwise) that specify actions to be taken are included. Thus, one example is a typical processing system that includes one or more processors. Each processor may include one or more of a CPU, a graphics processing unit, and a programmable DSP unit. The processing system further may include a memory subsystem including main RAM and/or a static RAM, and/or ROM. A bus subsystem may be included for communicating between the components. The processing system further may be a distributed processing system with processors coupled by a network. If the processing system requires a display, such a display may be included, e.g., a liquid crystal display (LCD) or a cathode ray tube (CRT) display. If manual data entry is required, the processing system also includes an input device such as one or more of an alphanumeric input unit such as a keyboard, a pointing control device such as a mouse, and so forth. The term memory unit as used herein, if clear from the context and unless explicitly stated otherwise, also encompasses a storage system such as a disk drive unit. The processing system in some configurations may include a sound output device, and a network interface device. The memory subsystem thus includes a computer-readable carrier medium that carries computer-readable code (e.g., software) including a set of instructions to cause performing, when executed by one or more processors, one of more of the methods described herein. Note that when the method includes several elements, e.g., several steps, no ordering of such elements is implied, unless specifically stated. The software may reside in the hard disk, or may also reside, completely or at least partially, within the RAM and/or within the processor during execution thereof by the computer system. Thus, the memory and the processor also constitute computer-readable carrier medium carrying computer-readable code.

Furthermore, a computer-readable carrier medium may form, or be included in a computer program product.

In alternative embodiments, the one or more processors operate as a standalone device or may be connected, e.g., networked to other processors), in a networked deployment, the one or more processors may operate in the capacity of a server or a user machine in server-user network environment, or as a peer machine in a peer-to-peer or distributed network environment. The one or more processors may form a personal computer (PC), a tablet PC, a set-top box (STB), a Personal Digital Assistant (PDA), a cellular telephone, a web appliance, a network router, switch or bridge, or any machine capable of executing a set of instructions (sequential or otherwise) that specify actions to be taken by that machine.

Note that while some diagrams only show a single processor and a single memory that carries the computer-readable code, those in the art will understand that many of the components described above are included, but not explicitly shown or described in order not to obscure the inventive aspect. For example, while only a single machine is illustrated, the term "machine" shall also be taken to include any collection of machines that individually or jointly execute a set (or multiple sets) of instructions to perform any one or more of the methodologies discussed herein.

Thus, one embodiment of each of the methods described herein is in the form of a computer-readable carrier medium carrying a set of instructions, e.g., a computer program that is for execution on one or more processors, e.g., one or more processors that are part of web server arrangement. Thus, as will be appreciated by those skilled in the art, embodiments of the present invention may be embodied as a method, an apparatus such as a special purpose apparatus, an apparatus such as a data processing system, or a computer-readable carrier medium, e.g., a computer program product. The computer-readable carrier medium carries computer readable code including a set of instructions that when executed on one or more processors cause the processor or processors to implement a method. Accordingly, aspects of the present invention may take the form of a method, an entirely hardware embodiment, an entirely software embodiment or an embodiment combining software and hardware aspects. Furthermore, the present invention may take the form of carrier medium (e.g., a computer program product on a computer-readable storage medium) carrying computer-readable program code embodied in the medium.

The software may further be transmitted or received over a network via a network interface device. While the carrier medium is shown in an exemplary embodiment to be a single medium, the term "carrier medium" should be taken to include a single medium or multiple media (e.g., a centralized or distributed database, and/or associated caches and servers) that store the one or more sets of instructions. The term "carrier medium" shall also be taken to include any medium that is capable of storing, encoding or carrying a set of instructions for execution by one or more of the processors and that cause the one or more processors to perform any one or more of the methodologies of the present invention. A carrier medium may take many forms, including but not limited to, non-volatile media, volatile media, and transmission media. Non-volatile media includes, for example, optical, magnetic disks, and magneto-optical disks. Volatile media includes dynamic memory, such as main memory. Transmission media includes coaxial cables, copper wire and fiber optics, including the wires that comprise a bus subsystem. Transmission media also may also take the form of acoustic or light waves, such as those generated during radio wave and infrared data communications. For example, the term "carrier medium" shall accordingly be taken to included, but not be limited to, solid-state memories, a computer product embodied in optical and magnetic media; a medium bearing a propagated signal detectable by at least one processor of one or more processors and representing a set of instructions that, when executed, implement a method; a carrier wave bearing a propagated signal detectable by at least one processor of the one or more processors and representing the set of instructions a propagated signal and representing the set of instructions; and a transmission medium in a network bearing a propagated signal detectable by at least one processor of the one or more processors and representing the set of instructions.

It will be understood that the steps of methods discussed are performed in one embodiment by an appropriate processor (or processors) of a processing (i.e., computer) system executing instructions (computer-readable code) stored in storage. It will also be understood that the invention is not limited to any particular implementation or programming technique and that the invention may be implemented using any appropriate techniques for implementing the functionality described herein. The invention is not limited to any particular programming language or operating system.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly it should be appreciated that in the above description of exemplary embodiments of the invention, various features of the invention are sometimes grouped together in a single embodiment, FIG., or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the Detailed Description are hereby expressly incorporated into this Detailed Description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those skilled in the art. For example, in the following claims, any of the claimed embodiments can be used in any combination.

Furthermore, some of the embodiments are described herein as a method or combination of elements of a method that can be implemented by a processor of a computer system or by other means of carrying out the function. Thus, a processor with the necessary instructions for carrying out such a method or element of a method forms a means for carrying out the method or element of a method. Furthermore, an element described herein of an apparatus embodiment is an example of a means for carrying out the function performed by the element for the purpose of carrying out the invention.

In the description provided herein, numerous specific details are set forth. However, it is understood that embodiments of the invention may be practiced without these specific details. In other instances, well-known methods, structures and techniques have not been shown in detail in order not to obscure an understanding of this description.

Similarly, it is to be noticed that the term coupled, when used in the claims, should not be interpreted as being limited to direct connections only. The terms "coupled" and "connected," along with their derivatives, may be used. It should be understood that these terms are not intended as synonyms for each other. Thus, the scope of the expression a device A coupled to a device B should not be limited to devices or systems wherein an output of device A is directly connected to an input of device B. It means that there exists a path between an output of A and an input of B which may be a path including other devices or means. "Coupled" may mean that two or more elements are either in direct physical or electrical contact, or that two or more elements are not in direct contact with each other but yet still co-operate or interact with each other.

## Claims

1. A digital video management (DVM) system including:
a plurality of camera servers, wherein each camera server is configured to utilise video data from an assigned one or more video streaming units; and
a plurality of video streaming units, wherein each streaming unit is configured to stream, onto a network, video data for a respective camera, wherein at least one video streaming unit is a multi-stream unit configured to provide video data for its respective camera concurrently via at least a first and second stream, wherein the first and second stream have respective video parameters;
**characterised in that** the system includes a configuration tool for allowing a user to define a protocol for the utilisation of discrete streams provided by a multi-stream unit, thereby to allow the creation of stream-related rules in a DVM object model, including a rule that causes a camera server that utilises the first stream for recording video data by default to, responsive to a signal indicative of an event in the DVM system, utilise the second stream for recording video for a predetermined period of time.

2. A DVM system according to claim 1 wherein the first and second video streams are used for respective purposes.

3. A DVM system according to claim 2 wherein purpose for one of the video streams is display of live video data.

4. A DVM system according to claim 2 wherein purpose for one of the video streams is recording of video data.

5. A DVM system according to claim 2 wherein purpose for one of the video streams is provision of video data for analytics.

6. A DVM system according to any one of the preceding claims wherein one stream is of relatively higher compression than the other stream.

7. A DVM system according to any one of claims 1 to 5 wherein one stream is of relatively higher frame rate than the other stream.

8. A DVM system according to any one of the preceding claims wherein the at least one video streaming unit is assigned to one camera server in respect of the first stream and another camera server in respect of the second stream.

9. A DVM system according to any one of the preceding claims including a management tool configured for allowing a user to assign at least one of the first and second streams to a respective purpose.

10. A DVM system according to any one of claims 1 to 8 including a management tool configured for allowing a user to assign at least one of the first and second streams to a respective camera server.

11. A DVM system according to any one of claims 1 to 8 including a management tool configured for allowing a user to define parameters for at least one of the first and second streams.

12. A DVM system according to any one of the preceding claims wherein a camera server that utilises the first stream is configured to be responsive to a signal for instead utilising the second stream.

13. A system according to claim 12 wherein the camera server utilises the first stream for recording video data by default and, responsive to the signal, utilises the second stream for recording video data during a prescribed period.

14. A system according to claim 12 or claim 13 wherein the signal is automatically generated in response to a prescribed event in the DVM system.

15. A method for operating a camera server in a DVM system, wherein the DVM system includes a plurality of camera servers, and a plurality of video streaming units, wherein each streaming unit is configured to stream, onto a network, video data for a respective camera, wherein at least one video streaming unit is a multi-stream unit configured to provide video data for its respective camera concurrently via at least a first and second stream, the method including the steps of:
utilising the first stream for a specified purpose;
responsive to a signal, utilising the second stream for the specified purpose.
**characterised in that** the method includes providing a configuration tool for allowing a user to define a protocol for the utilisation of discrete streams provided by a multi-stream unit, thereby to allow the creation of stream-related rules in a DVM object model, including a rule that causes a camera server that utilises the first stream for recording video data by default to, responsive to a signal indicative of an event in the DVM system, utilise the second stream for recording video for a predetermined period of time.

## Patentansprüche

1. System zur digitalen Videoverwaltung, DVM, umfassend:
eine Vielzahl von Kameraservern, wobei jeder Kameraserver so konfiguriert ist, dass er Videodaten von einer oder mehreren zugewiesenen Videostreaming-Einheiten verwendet; und
eine Vielzahl von Videostreaming-Einheiten, wobei jede Streaming-Einheit konfiguriert ist, um Videodaten einer jeweiligen Kamera in ein Netzwerk zu streamen, wobei mindestens eine Videostreaming-Einheit eine Multi-Stream-Einheit ist, die konfiguriert ist, um Videodaten ihrer jeweiligen Kamera über mindestens einen ersten und einen zweiten Stream gleichzeitig bereitzustellen, wobei der erste und der zweite Stream jeweilige Videoparameter aufweisen; **dadurch gekennzeichnet, dass** das System ein Konfigurationstool einschließt, mit dem ein Benutzer ein Protokoll zur Verwendung diskreter Streams definieren kann, die von einer Multi-Stream-Einheit bereitgestellt werden, wodurch die Erstellung von Stream-bezogenen Regeln in einem DVM-Objektmodell ermöglicht wird, die eine Regel umfassen, die einen Kameraserver, der standardmäßig den ersten Stream zum Aufzeichnen von Videodaten verwendet, als Reaktion auf ein Signal, das ein Ereignis im DVM-System angibt, veranlasst, für einen vorbestimmten Zeitraum den zweiten Stream zum Aufzeichnen von Video zu verwenden.

2. DVM-System nach Anspruch 1, wobei der erste und der zweite Videostream für jeweilige Zwecke verwendet werden.

3. DVM-System nach Anspruch 2, wobei der Zweck eines der Videostreams die Anzeige von Live-Videodaten ist.

4. DVM-System nach Anspruch 2, wobei der Zweck eines der Videostreams das Aufzeichnen von Videodaten ist.

5. DVM-System nach Anspruch 2, wobei der Zweck eines der Videostreams die Bereitstellung von Videodaten zur Analytik ist.

6. DVM-System nach einem der vorhergehenden Ansprüche, wobei ein Stream eine relativ höhere Kompression als der andere Stream aufweist.

7. DVM-System nach einem der Ansprüche 1 bis 5, wobei ein Stream eine relativ höhere Bildrate als der andere Stream aufweist.

8. DVM-System nach einem der vorhergehenden Ansprüche, wobei die mindestens eine Videostreaming-Einheit einem Kameraserver in Bezug auf den ersten Stream und einem anderen Kameraserver in Bezug auf den zweiten Stream zugewiesen ist.

9. DVM-System gemäß einem der vorhergehenden Ansprüche, einschließend ein Verwaltungstool, das konfiguriert ist, um einem Benutzer zu ermöglichen, mindestens einen des ersten und des zweiten Streams einem jeweiligen Zweck zuzuweisen.

10. DVM-System nach einem der Ansprüche 1 bis 8, einschließend ein Verwaltungstool, das konfiguriert ist, um einem Benutzer zu ermöglichen, mindestens einen des ersten und des zweiten Streams einem jeweiligen Kameraserver zuzuweisen.

11. DVM-System nach einem der Ansprüche 1 bis 8, einschließend ein Verwaltungstool, das konfiguriert ist, um einem Benutzer zu ermöglichen, Parameter für mindestens einen des ersten und des zweiten Streams zu definieren.

12. DVM-System nach einem der vorhergehenden Ansprüche, wobei ein Kameraserver, der den ersten Stream verwendet, so konfiguriert ist, dass er auf ein Signal reagiert, um stattdessen den zweiten Stream zu verwenden.

13. System nach Anspruch 12, wobei der Kameraserver standardmäßig den ersten Stream zum Aufzeichnen von Videodaten verwendet und als Reaktion auf das Signal den zweiten Stream zum Aufzeichnen von Videodaten während eines vorgegebenen Zeitraums verwendet.

14. System nach Anspruch 12 oder Anspruch 13, wobei das Signal als Reaktion auf ein vorgegebenes Ereignis im DVM-System automatisch erzeugt wird.

15. Verfahren zum Betreiben eines Kameraservers in einem DVM-System, wobei das DVM-System eine Vielzahl von Kameraservern und eine Vielzahl von Videostreaming-Einheiten umfasst, wobei jede Streaming-Einheit konfiguriert ist, um Videodaten einer jeweiligen Kamera in ein Netzwerk zu streamen, wobei mindestens eine Videostreaming-Einheit eine Multi-Stream-Einheit ist, die konfiguriert ist, um Videodaten ihrer jeweiligen Kamera über mindestens einen ersten und einen zweiten Stream gleichzeitig bereitzustellen, wobei das Verfahren die folgenden Schritte umfasst:
Verwenden des ersten Streams für einen spezifizierten Zweck;
Verwenden als Reaktion auf ein Signal des zweiten Streams für den spezifizierten Zweck,
**dadurch gekennzeichnet, dass** das Verfahren ein Bereitstellen eines Konfigurationstools umfasst, mit dem ein Benutzer ein Protokoll zur Verwendung diskreter Streams definieren kann, die von einer Multi-Stream-Einheit bereitgestellt werden, wodurch die Erstellung von Stream-bezogenen Regeln in einem DVM-Objektmodell ermöglicht wird, die eine Regel umfassen, die einen Kameraserver, der standardmäßig den ersten Stream zum Aufzeichnen von Videodaten verwendet, als Reaktion auf ein Signal, das ein Ereignis im DVM-System angibt, veranlasst, für einen vorbestimmten Zeitraum den zweiten Stream zum Aufzeichnen von Video zu verwenden.

## Revendications

1. Système de gestion vidéo numérique (DVM) comprenant :
une pluralité de serveurs de caméras, chaque serveur de caméras étant configuré pour utiliser des données vidéo à partir d'au moins une unité de transmission vidéo en continu attribuée ; et
une pluralité d'unités de transmission vidéo en continu, chaque unité de transmission étant conçue pour transmettre en continu, sur un réseau, des données vidéo pour une caméra respective, au moins une unité de transmission vidéo en continu étant une unité de flux de données vidéo multiples conçue pour fournir simultanément des données vidéo pour sa caméra respective par l'intermédiaire d'au moins un premier et un second flux, les premier et second flux présentant des paramètres vidéo respectifs ; **caractérisé en ce que** ledit système comprend un outil de configuration pour permettre à un utilisateur de définir un protocole pour l'utilisation de flux distincts fournis par une unité de flux de données vidéo multiples, permettant ainsi la création de règles liées au flux dans un modèle d'objet DVM, notamment une règle qui amène un serveur de caméras, lequel utilise le premier flux pour enregistrer les données vidéo par défaut, à, en réponse à un signal indicatif d'un événement dans le système DVM, utiliser le second flux pour enregistrer la vidéo pour une période de temps prédéfinie.

2. Système DVM selon la revendication 1, les premier et second flux de données vidéo étant utilisés pour des buts respectifs.

3. Système DVM selon la revendication 2, le but pour l'un des flux de données vidéo consistant à afficher les données vidéo en direct.

4. Système DVM selon la revendication 2, le but pour l'un des flux de données vidéo consistant à enregistrer les données vidéo en direct.

5. Système DVM selon la revendication 2, le but pour l'un des flux de données vidéo consistant à fournir des données vidéo pour l'analyse.

6. Système DVM selon l'une quelconque des revendications précédentes, un flux ayant une compression relativement supérieure à celle de l'autre flux.

7. Système DVM selon l'une quelconque des revendications 1 à 5, un flux ayant une fréquence d'images relativement supérieure à celle de l'autre flux.

8. Système DVM selon l'une quelconque des revendications précédentes, l'au moins une unité de transmission vidéo en continu étant associée à un serveur de caméras par rapport au premier flux et à un autre serveur de caméras par rapport au second flux.

9. Système DVM selon l'une quelconque des revendications précédentes, comprenant un outil de gestion conçu pour permettre à un utilisateur d'associer le premier et/ou le second flux à un but respectif.

10. Système DVM selon l'une quelconque des revendications 1 à 8, comprenant un outil de gestion conçu pour permettre à un utilisateur d'associer le premier et/ou le second flux à un serveur de caméras respectif.

11. Système DVM selon l'une quelconque des revendications 1 à 8, comprenant un outil de gestion conçu pour permettre à un utilisateur de définir des paramètres pour le premier et/ou le second flux.

12. Système DVM selon l'une quelconque des revendications précédentes, un serveur de caméras, qui utilise le premier flux étant conçu pour répondre à un signal pour utiliser plutôt le second flux.

13. Système selon la revendication 12, le serveur de caméras utilisant le premier flux pour enregistrer les données vidéo par défaut et, en réponse au signal, utilisant le second flux pour enregistrer les données vidéo pendant une période prescrite.

14. Système selon la revendication 12 ou la revendication 13, le signal étant produit automatiquement en réponse à un événement prescrit dans le système DVM.

15. Procédé de fonctionnement d'un serveur de caméras dans un système DVM, ledit système DVM comprenant une pluralité de serveurs de caméras et une pluralité d'unités de transmission vidéo en continu, chaque unité de transmission étant conçue pour transmettre en continu, sur un réseau, des données vidéo pour une caméra respective, au moins une unité de transmission vidéo en continu étant une unité de flux de données vidéo multiples conçue pour fournir simultanément des données vidéo pour sa caméra respective par l'intermédiaire d'au moins un premier et un second flux, ledit procédé comprenant les étapes suivantes :
l'utilisation du premier flux dans un but spécifié ;
l'utilisation, en réponse à un signal, du second flux dans le but spécifié,
**caractérisé en ce que** ledit procédé consistant à fournir un outil de configuration pour permettre à un utilisateur de définir un protocole d'utilisation des flux distincts fournis par une unité de flux de données multiples, pour ainsi permettre la création de règles liées au flux dans un modèle d'objet DVM, notamment une règle, laquelle amène un serveur de caméra, qui utilise le premier flux pour enregistrer les données vidéo par défaut, à, en réponse à un signal indicatif d'un événement dans le système DVM, utiliser le second flux pour enregistrer la vidéo pour une période de temps prédéfinie.
